# EUROPÄISCHE PATENTANMELDUNG

(11) **EP 2 711 162 A2**
(43) Veröffentlichungstag der Anmeldung: **26.03.2014**
(21) Anmeldenummer: 12007359.8
(22) Anmeldetag: 26.10.2012
(51) Int. Cl.: B29C 59/04, C08G 18/00, E04D 3/00

(54) **Einseitig geprägte PVC-Profilplatte mit Sonnenschutzfunktion**

(30) Priorität: 19.09.2012 DE 102012018479
(71) Anmelder: VPW Nink GmbH, 06526 Sangerhausen (DE)
(72) Erfinder: Würz, Peter L., Dipl.-Ing., 48712 Gescher (DE); Deinert, Jürgen, Dr.-Ing., 37115 Duderstadt (DE)

(57) **Zusammenfassung**

Der Erfindung liegt die Aufgabe zugrunde, transparente Kunststoffprofilplatten aus PVC als Dachelement mit mindestens 1,5 mm Wandstärke und einseitig geprägter Oberfläche bereitzustellen, die verbesserten Schutz vor UV-Bestrahlung bieten.

Gelöst wurde die Aufgabe durch Erhöhung der Konzentration an UV-Absorber in Kombination mit einer Prägestruktur, die den Anteil an totalreflektierter Strahlung erhöht und daher einen Winkel in der Prägestruktur von mehr als 18° aufweist. Neben den durch die Prägestruktur erhöhten Anteile an reflektierter Strahlung erscheint auch eine verbesserte Absorbtion der Strahlung durch verlängerte Strahlengänge innerhalb der PVC-Profilplatte eine Rolle zu spielen, da Ansonsten keine Erklärung für den Zusammenhang zwischen der Prägestruktur und den geringen benötigten UV-Absorberanteilen verfügbar ist.

## Beschreibung

Der Erfindung liegt die Aufgabe zugrunde, transparente Kunststoffprofilplatten aus PVC als Dachelement mit mindestens 1,5 mm Wandstärke und einseitig geprägter Oberfläche bereitzustellen, die verbesserten Schutz vor UV-Bestrahlung bieten.

Stand der Technik sind transparente, einseitig geprägte Wellplatten z. B. aus PMMA. Solche Platten weisen zumeist gesondert lichtstabilisierte Deckschichten auf. Für die Anwendung als Dach- oder Fassadenelement weisen solche Produkte keinen besonderen Lichtschutzeigenschaften auf. PMMA ist im Gegenteil dafür bekannt, auch im Bereich zwischen 280 und 370 nm Wellenlänge hohe Lichtdurchlässigkeit aufzuweisen. Bekannt sind weiterhin einseitig geprägte PVC-Wellplatten, die Lichtschutzmittel zur Erhöhung der Witterungsbeständigkeit enthalten. Allerdings weisen solche Platten eine unzureichende Absorption an UV-Strahlung auf, sodass mehr als 50 % der UV-Strahlung zwischen 280 und 370 nm die Platten durchdringen.

Gelöst wurde die Aufgabe durch Erhöhung der Konzentration an UV-Absorber in Kombination mit einer Prägestruktur, die den Anteil an totalreflektierter Strahlung erhöht und daher einen Winkel in der Prägestruktur von mehr als 18° aufweist. Überraschend war hierbei, dass bereits eine geringfügige Erhöhung der zum Schutz des PVC eingesetzten Gehaltes an UV-Absorbern auf 0,4 % den Wert der Absorption an UV-Strahlung mit Wellenlängen < 370 nm auf 80 % reduzieren kann, obwohl durch die Prägung Bereiche mit reduzierter Wandstärke entstehen. Neben den durch die Prägestruktur erhöhten Anteile an reflektierter Strahlung erscheint auch eine verbesserte Absorbtion der Strahlung durch verlängerte Strahlengänge innerhalb der PVC-Profilplatte eine Rolle zu spielen, da Ansonsten keine Erklärung für den Zusammenhang zwischen der Prägestruktur und den geringen benötigten UV-Absorberanteilen verfügbar ist. Je nach Anforderungsprofil kann es vorteilhaft sein, die Konzentration an UV-Absorbern weiter zu erhöhen, was aber oftmals mit einer Verfärbung des Produktes einhergeht und mit erhöhten Kosten verbunden ist.

Je größer der Winkel in der Prägestruktur, desto mehr Strahlung wird aufgrund des Effektes der Totalreflektion in Bereiche mit hoher Wandstärke gestreut und im günstigsten Falle reflektiert. Benötigt wird ein Winkel von mindestens 18 °, um einen ausreichen starken Effekt der Totalreflektion zu erhalten. Vorteilhafter ist ein Winkel von mindestens 30 °, besonders Vorteilhaft ein Winkel von 35 °, um den Weg der Strahlung derart zu verlängern, dass mindestens 85 % der Strahlung im Wellenlängenbereich von 280 - 370 nm absorbiert oder reflektiert werden kann.

Vorteilhaft ist der Einsatz von UV-Absorbern auf Basis Benzotriazol, Benzophenon und Cyanacrylat. Da diese Absorber bei verschiedenen Wellenlängen unterschiedliche Absorptionsfähigkeiten besitzen, können diese Absorber auch vorteilhafterweise miteinander kombiniert werden.

Besonders Wirksam erweisen sich die UV-Absorber in Kombination und Verarbeitungsstabilisatören auf Basis Al-, Ca- oder Zinncarboxylaten. Auch Organophosphite verbesser die Langzeitwirksamkeit der UV-Absorber.

Weiterhin können mineralische Stoffe, wie z. B. Titandioxid, Calziumcarbonat oder Zinksulfid eingesetzt werden. Besonders vorteilhaft ist hierbei eine Teilchengröße von 150 - 180 µm, sodass Lichtbrechung im sichtbaren Wellenlängenbereich, nicht aber im UV-Bereich vermieden wird.

Die aufgeführten mineralischen Stoffe vermindern die Wärmekapazität der Schmelze, wodurch die Verarbeitbarkeit verbessert wird. Zudem werden die Steifigkeit und Zähigkeit der Platten erhöht.

Die erfindungsgemäßen Profilplatten können hergestellt werden, indem die Rohstoffe in einer Schneckenmaschine vermischt und plastifiziert werden und anschließend als Schmelzefilm ausgetragen und mit einer Strukturwalze geprägt und nachfolgend mittels eines Umformwerkzeugs profiliert wird, wobei die Kerntemperatur des Extrudates vor dem Prägen um mindestens 10 °C höher und vor dem Umformen mindestens 10°C niedriger sein muss als in der Randschicht.

Durch diese Temperaturführung kann der Materialfluss beim Prägen bei gleichzeitig kurzen Verweilzeiten im Prägespalt sowie bei der Profilierung die Flexibilität des Schmelzefilms bei gleichzeitig hoher Schmelzefestigkeit verbessert werden.

Als Umformwerkzeug kann ein statisches Werkzeug bestehend aus Kühlprofilen eingesetzt werden, aber auch ein Rollenwerkzeug. Besonders vorteilhaft erweist sich aber die Kombination aus statischem Werkzeug und Rollenwerkzeug.

Folgende Ausführungsformen sollen beispielhaft aufgeführt werden:

### Beispiel 1:

| | | |
|---|---|---|
| Profilform: | Trapez 76/18 | |
| Winkel der Prägestruktur: | 25° | |
| Wandstärke: | 2,5 mm | |
| Flächengewicht: | 3,10 kg/m² | |
| Zusammensetzung: | 100 T PVC | (K= 65) |
| | 2,5 T Reatinor 480 | (Zinncarboxylat) |
| | 0,5 T Uvinul 3033P | (Benzotriazol) |
| | 0,2 T Doverphos 680 | (Organophosphit) |
| | 0,2 T Hombitec | (Titanoxid) |
| Schmelzetemperatur Rand: | Vor Prägung: | 175°C |
| | Vor Umformung: | 120°C |
| Schmelzetemperatur Kern: | Vor Prägung: | 190°C |
| | Vor Umformung: | 105°C |

### Beispiel 2:

| | | |
|---|---|---|
| Profilform: | Trapez 70/18 | |
| Winkel der Prägestruktur: | 35 ° | |
| Wandstärke: | 1,5 mm | |
| Flächengewicht: | 2,20 kg/m² | |
| Zusammensetzung: | 100 T PVC | (K= 57) |
| | 2,3 T Reatinor 480 | (Zinncarboxylat) |
| | 0,4 T Uvinul 3033P | (Benzotriazol) |
| | 0,3 T Uvinul 3035 | (Cyanacrylat) |
| | 0,2 T Doverphos 680 | (Organophosphit) |
| Schmelzetemperatur Rand: | Vor Prägung: | 170°C |
| | Vor Umformung: | 105°C |
| Schmelzetemperatur Kern: | Vor Prägung: | 182 °C |
| | Vor Umformung: | 93°C |

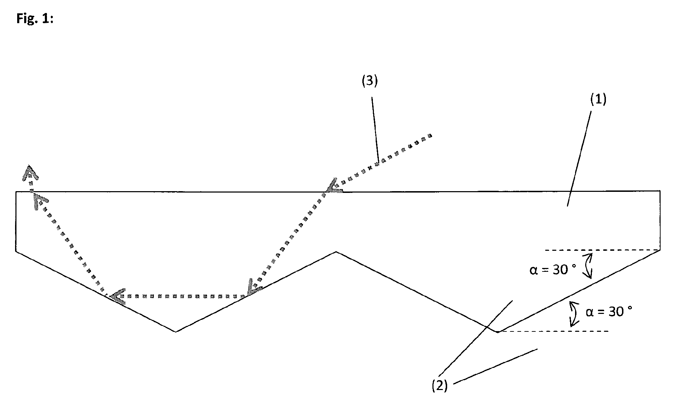

Fig. 1 zeigt eine Skizze der erfindungsgemäßen Prägeplatte bestehend aus PVC (1), die in der Prägestruktur auf der Plattenunterseite einen Winkel von 30 ° (2) aufweist und ein Strahlengang eines in der Platte reflektierter Lichtstrahls (3) eingezeichnet ist.

## Patentansprüche

1. Transparente Profilplatte mit mindestens 1,5 mm Schichtstärke aus mindestens 67 % PVC, beispielsweise als Dach- oder Fassadenelement mit einseitig geprägter Oberfläche, **dadurch gekennzeichnet, dass** die Formplatte Wellenlängen unterhalb von 370 nm Wellenlängen mindestens 85 % der Strahlung absorbiert oder reflektiert und die geprägte Struktur einen Winkel von mindestens 18 ° aufweist.

2. Transparente Wellplatte nach Anspruch 1, **dadurch gekennzeichnet, dass** der Winkel der aufgeprägten Struktur mindestens 30 ° beträgt.

3. Transparente Wellplatte nach Anspruch 1, **dadurch gekennzeichnet, dass** der Winkel der aufgeprägten Struktur mindestens 35 ° beträgt.

4. Transparente Wellplatte nach den Ansprüchen 1 bis 3, **dadurch gekennzeichnet, dass** 0,4 % bis 0,5 % UV-Absorber eingesetzt werden.

5. Transparente Wellplatte nach den Ansprüchen 1 bis 3, **dadurch gekennzeichnet, dass** 0,5 % bis 0,7 % UV-Absorber eingesetzt werden.

6. Transparente Wellplatte nach den Ansprüchen 1 bis 3, **dadurch gekennzeichnet, dass** mehr als 0,7 % UV-Absorber eingesetzt werden.

7. Transparente Wellplatte nach einem der vorhergehenden Ansprüchen, **dadurch gekennzeichnet, dass** als UV-Absorber Benzotriazole eingesetzt werden.

8. Transparente Wellplatte nach einem der vorhergehenden Ansprüchen 1 bis 6, **dadurch gekennzeichnet, dass** als UV-Absorber Benzophenone eingesetzt werden.

9. Transparente Wellplatte nach einem der vorhergehenden Ansprüchen 1 bis 6, **dadurch gekennzeichnet, dass** als UV-Absorber Cyanacrylate eingesetzt werden.

10. Transparente Wellplatte nach einem der vorhergehenden Ansprüchen 1 bis 6, **dadurch gekennzeichnet, dass** ein Gemisch aus verschiedenen UV-Absorber eingesetzt werden.

11. Transparente Wellplatte nach einem der vorhergehenden, **dadurch gekennzeichnet, dass** organische Zinncarboxylate als Verarbeitungsstabiliasator eingesetzt wird.

12. Transparente Wellplatte nach einem der vorhergehenden Ansprüchen 1 bis 10, **dadurch gekennzeichnet, dass** kalziumhaltige Verarbeitungsstabiliasatoren eingesetzt werden.

13. Transparente Wellplatte nach einem der vorhergehenden Ansprüchen 1 bis 10, **dadurch gekennzeichnet, dass** zinkhaltige Verarbeitungsstabilisatoren eingesetzt werden.

14. Transparente Wellplatte nach einem der vorhergehenden Ansprüchen 1 bis 10, **dadurch gekennzeichnet, dass** Gemische aus zink-, calzium- und aluminiumhaltigen Verarbeitungsstabilisatoren eingesetzt werden.

15. Transparente Wellplatte nach einem der vorhergehenden Ansprüchen, **dadurch gekennzeichnet, dass** zusätzlich Titandioxid, Zinksulfid oder Calciumcarbonat eingesetzt werden.

16. Transparente Wellplatte nach einem der vorhergehenden Ansprüchen, **dadurch gekennzeichnet, dass** zusätzlich Orthokieselsäure eingesetzt werden.

17. Transparente 3-Schichtverbund-Wellplatte nach einem der vorhergehenden Ansprüchen, **dadurch gekennzeichnet, dass** zusätzlich mindestens 0,2 % Organophosphit eingesetzt wird.

18. Verfahren zur Herstellung von transparenten Profilplatten nach einem der vorhergehenden Ansprüchen, **dadurch gekennzeichnet, dass** die Rohstoffe in einer Schneckenmaschine vermischt und plastifiziert werden und anschließend als Schmelzefilm ausgetragen und mit einer Strukturwalze geprägt und nachfolgend mittels eines Umformwerkzeugs profiliert wird, wobei die Kerntemperatur des Extrudates vor dem Prägen um mindestens 10 °C höher und vor dem Umformen mindestens 10°C niedriger sein muss als in der Randschicht

19. Verfahren zur Herstellung von transparenten Profilplatte nach Anspruch 18, **dadurch gekennzeichnet, dass** zur Kühlung der Plastifikatoberflächen zwischen Extruder und Prägewalze Kühlelemente positioniert werden.

20. Verfahren zur Herstellung von transparenten Profilplatte nach Anspruch 19, **dadurch gekennzeichnet, dass** Kühlwalzen verwendet werden.

21. Verfahren zur Herstellung von transparenten Profilplatte nach Anspruch 19, **dadurch gekennzeichnet, dass** eine Aerosol-Sprühvorrichtung verwendet wird.

22. Verfahren zur Herstellung von transparenten Profilplatten nach Anspruch 18, **dadurch gekennzeichnet, dass** zum Erwärmen der Plastifikatoberflächen zwischen Prägewalze und Umformwerkzeug Heizelemente positioniert werden.

23. Verfahren zur Herstellung von transparenten Profilplatten nach Anspruch 22, **dadurch gekennzeichnet, dass** Infrarotwärmestrahler verwendet werden.

24. Verfahren zur Herstellung von transparenten Profilplatten nach Anspruch 18, **dadurch gekennzeichnet, dass** zur Umformung ein oder mehrere statische Werkzeuge eingesetzt werden.

25. Verfahren zur Herstellung von transparenten Profilplatten nach Anspruch 18, **dadurch gekennzeichnet, dass** zur Umformung ein Rollenwerkzeug eingesetzt wird.

26. Verfahren zur Herstellung von transparenten Profilplatten nach Anspruch 18, **dadurch gekennzeichnet, dass** zur Umformung Rollenwerkzeugen und statische Werkzeuge kombiniert werden.
